# EUROPÄISCHE PATENTSCHRIFT

(11) **EP 3 538 299 B1**
(45) Veröffentlichungstag und Bekanntmachung des Hinweises auf die Patenterteilung: **13.10.2021**
(21) Anmeldenummer: 17803831.1
(22) Anmeldetag: 09.11.2017
(51) Int. Cl.: B33Y 10/00, B33Y 30/00, B33Y 50/02, B29C 64/153, B22F 10/28, B22F 10/31, B23K 26/04, B29C 64/268, B22F 12/00, B22F 12/90, B22F 12/60

(54) **VERFAHREN ZUM BESTIMMEN EINES STRAHLPROFILS EINES LASERSTRAHLS UND BEARBEITUNGSMASCHINE MIT RETROREFLEKTOREN**
METHOD FOR DETERMINING A BEAM PROFILE OF A LASER BEAM, AND PROCESSING MACHINE WITH RETROREFLECTORS
PROCÉDÉ POUR DÉTERMINER UN PROFIL DE FAISCEAU D'UN FAISCEAU LASER ET MACHINE D'USINAGE AVEC DES RETROREFLECTEURS

(30) Priorität: 11.11.2016 DE 102016222187
(43) Veröffentlichungstag der Anmeldung: 18.09.2019
(73) Patentinhaber: Trumpf Laser- und Systemtechnik GmbH, 71254 Ditzingen (DE)
(72) Erfinder: ALLENBERG-RABE, Matthias, 70499 Stuttgart (DE); WAGENBLAST, Philipp, 71229 Leonberg (DE)
(74) Vertreter: Kohler Schmid Möbus Patentanwälte
(86) Internationale Anmeldenummer: PCT/EP2017/078810
(87) Internationale Veröffentlichungsnummer: WO 2018/087256

(56) Entgegenhaltungen:
- EP-A1- 0 331 962
- WO-A2-2016/085334
- DE-A1-102015 001 421
- DE-B3-102012 100 721
- US-A1- 2009 002 687
- US-A1- 2010 176 539
- US-A1- 2015 346 330
- US-A1- 2016 082 668

## Beschreibung

Die vorliegende Erfindung betrifft ein Verfahren zum Bestimmen eines Strahlprofils eines Laserstrahls, der mittels einer Scannereinrichtung in einem Bearbeitungsfeld positioniert wird. Die Erfindung betrifft auch eine Bearbeitungsmaschine zum Herstellen von dreidimensionalen Bauteilen durch Bestrahlen von Pulverschichten. Für die Laserbearbeitung ist es vorteilhaft, das Strahlprofil eines Laserstrahls, d.h. die ortsabhängige Intensitätsverteilung bzw. Leistungsverteilung des Laserstrahls senkrecht zur Ausbreitungsrichtung des Laserstrahls, zu bestimmen bzw. genau zu kennen. Insbesondere ist die Kenntnis des Strahlprofils an oder in der Nähe einer Bearbeitungsebene günstig, in welcher der Laserstrahl typischerweise für die Bearbeitung fokussiert wird. In oder in der Nähe der Bearbeitungsebene kann beispielsweise bei einer Laser-Bearbeitungsmaschine ein Werkstück angeordnet sein oder bei einer Bearbeitungsmaschine zur Herstellung von dreidimensionalen Bauteilen eine zu bestrahlende Pulverschicht. Bei einer solchen Bearbeitungsmaschine wird ein Laserstrahl auf eine Schicht aus einem Pulvermaterial, typischerweise in Form eines Metallpulvers, fokussiert und durch den Laserstrahl lokal aufgeschmolzen, um eine Schicht des dreidimensionalen Bauteils zu erzeugen ("laser metal fusion", LMF).

Um einen möglichst stabilen Bearbeitungsprozess sicherzustellen, ist es erforderlich, dass die Scannereinrichtung bzw. eine Bestrahlungseinrichtung mit einer solchen Scannereinrichtung ein möglichst definiertes, reproduzierbares Strahlprofil (Laserspot) im Pulverbett bzw. auf der mittels des Laserstrahls bestrahlten Pulverschicht bereitstellt. Das Strahlprofil kann zu diesem Zweck bei bzw. während der Inbetriebnahme der Bearbeitungsmaschine mit Hilfe eines speziellen Messgeräts durchgeführt werden, welches in der Nähe der Bearbeitungsebene in die Bearbeitungseinrichtung eingebracht wird. Da die Bearbeitungskammer normalerweise nicht von außen zugänglich ist, ist der zeitliche Aufwand für den Auf- und Abbau des Messgeräts sowie für die eigentliche Messung erheblich und kann bei mehreren Stunden liegen. Da das Messgerät einen erheblichen Bauraum benötigt, kann die Bestimmung des Strahlprofils zudem nicht während des Betriebs der Bearbeitungsmaschine durchgeführt werden.

Aus der JP H02-038931 A ist eine Vorrichtung zur Vermessung des Intensitätsprofils eines Laserstrahls bekannt geworden, die einen im Strahlengang des Laserstrahls angeordneten teildurchlässigen Umlenkspiegel zur Auskopplung eines geringen Anteils der Strahlungsleistung des Laserstrahls auf einen ortsauflösenden Detektor aufweist. Vorzugsweise wird hierfür ein Umlenkspiegel genutzt, der ohnehin bereits zur Strahlumlenkung im Strahlengang vorgesehen ist.

In der DE 10 2015 001 421 A1 ist eine Vorrichtung zur Bestimmung geometrischer Parameter eines Laserstrahls beschrieben, die eine Strahldiagnose-Einrichtung sowie ein optisches System umfasst, das zur Fokussierung eines Laserstrahls in einem Bearbeitungs-Bereich ausgebildet ist. Ein Reflektor-Element ist in einem Positionier-Bereich zwischen dem optischen System und dem Bearbeitungsbereich positionierbar und weist eine erste Fläche auf, die teilreflektierend ist, wobei die erste Fläche gekrümmt ist und wobei die Krümmung der ersten Fläche gleich einer mittleren Krümmung einer Wellenfront des von dem optischen System fokussierten Laserstrahls in dem Positionier-Bereich des Reflektor-Elements ist. Als Reflektor-Element kann eine optische Linse mit einer sphärischen Fläche verwendet werden, beispielsweise eine Plankonvex-Linse oder eine konzentrische Meniskus-Linse. Die Strahldiagnose-Einrichtung kann eine Einrichtung zur Fokussierung von ausgekoppelter Strahlung sowie einen ortsauflösenden Sensor umfassen. EP0331962A1 offenbart eine Laserschweißvorrichtung und ein Verfahren, bei dem Retroreflektoren für die Kalibrierung der Laserstrahlposition verwendet werden.

### Aufgabe der Erfindung

Der Erfindung liegt die Aufgabe zugrunde, ein Verfahren der eingangs genannten Art und eine Bearbeitungsmaschine bereitzustellen, welche eine einfache und schnelle Bestimmung des Strahlprofils eines Laserstrahls ermöglichen.

### Gegenstand der Erfindung

Diese Aufgabe wird erfindungsgemäß durch ein Verfahren der eingangs genannten Art gelöst, welches folgende Schritte umfasst: Anordnen mindestens eines Retroreflektors in dem Bearbeitungsfeld der Scannereinrichtung, das bevorzugt in einer Bearbeitungskammer zum Bestrahlen von Pulverschichten gebildet ist, Detektieren von Laserstrahlung, die beim scannenden Überfahren des Retroreflektors mit dem Laserstrahl in die Scannereinrichtung zurück reflektiert wird, sowie Bestimmen des Strahlprofils des Laserstrahls anhand der beim scannenden Überfahren des Retroreflektors detektierten Laserstrahlung.

Erfindungsgemäß wird vorgeschlagen, zum Bestimmen des Strahlprofils in dem Bearbeitungsfeld der Scannereinrichtung einen Retroreflektor zu verwenden, d.h. ein reflektierendes Material bzw. ein reflektierendes Objekt, welches einen erheblichen Anteil der Intensität des auftreffenden Laserstrahls im Wesentlichen unabhängig vom Einfallswinkel zur Strahlquelle - im vorliegenden Fall zur Scannereinrichtung - zurück reflektiert. Der Retroreflektor weist bevorzugt über einen großen Einfallswinkelbereich von z.B. zwischen ca. 65° und ca. 115°, d.h. bei einem um bis zu ca. +/-25° von einem senkrechten Einfall auf den Retroreflektor abweichenden Einfallswinkel, eine Reflektivität von mindestens 4 %, ggf. von mindestens 5% in die Einfallsrichtung des Laserstrahls auf. Die Reflektivität des Retroreflektors in die Einfallsrichtung ist somit deutlich größer als bei herkömmlichen reflektierenden Objekten bzw. Materialien, bei denen die einfallende Strahlung spekular reflektiert wird, so dass nur ein sehr kleiner Anteil an gestreuter Laserstrahlung in die Einfallsrichtung des Laserstrahls zurück reflektiert wird. Die erhöhte Intensität der von dem Retroreflektor zur Scannereinrichtung zurück reflektierten Laserstrahlung erhöht deren Detektierbarkeit und somit die Präzision bei der Bestimmung des Strahlprofils des Laserstrahls.

Die Intensität der zurück reflektierten Laserstrahlung, die auf den Detektor trifft, hängt beispielsweise vom Brechungsindex des verwendeten Reflektor-Materials ab, wie weiter unten näher beschrieben wird. Dieses Material kann auf die Leistung des Laserstrahls, der auf den Retroreflektor trifft, sowie auf die Durchlässigkeit von optischen Elementen, die zwischen dem Retroreflektor und einem Detektor zur Detektion der zurück reflektierten Laserstrahlung angeordnet sind, derart abgestimmt werden, dass der Messbereich des Detektors bzw. dessen Empfindlichkeit optimal ausgenutzt wird. Besonders relevant ist hierbei die Auslegung der optischen Eigenschaften eines Auskoppelelements zur Auskopplung der zurück reflektierten Laserstrahlung aus dem Strahlengang des Laserstrahls, bei dem es sich beispielsweise um einen teildurchlässigen Spiegel handeln kann.

Bei einer Scannereinrichtung, die in einer Bearbeitungsmaschine zur Herstellung von dreidimensionalen Bauteilen verwendet wird, befindet sich das Bearbeitungsfeld der Scannereinrichtung in einer Bearbeitungskammer, in der sich auch ein Pulvermaterial befindet. Eine Fokussiereinrichtung fokussiert den Laserstrahl in eine Bearbeitungsebene, in der das Bearbeitungsfeld gebildet ist. In der Bearbeitungsebene befindet sich typischerweise eine jeweilige Pulverschicht, die mittels des Laserstrahls lokal bestrahlt wird, um eine Schicht des dreidimensionalen Bauteils zu erzeugen. Der Retroreflektor kann für das Bestimmen des Strahlprofils manuell in die Bearbeitungskammer eingebracht und in dem Bearbeitungsfeld angeordnet werden, und zwar typischerweise an oder in der Nähe der Bearbeitungsebene. Gegebenenfalls kann der Retroreflektor auch dauerhaft in dem Bearbeitungsfeld angeordnet werden, z.B. indem dieser am Rand des Bearbeitungsfeldes angebracht bzw. befestigt wird.

Wird ein nicht ortsauflösender Detektor zum Detektieren der zur Scannereinrichtung zurück reflektierten Laserstrahlung verwendet, kann jeder Winkelposition der Scannerspiegel der Scannereinrichtung und damit jeder Auftreffposition des Laserstrahls auf dem Retroreflektor ein Signalpegel bzw. ein Intensitätswert zugeordnet werden. Auf diese Weise kann beim einmaligen scannenden Überfahren des Retroreflektors das (eindimensionale) Strahlprofil bzw. die Intensitätsverteilung entlang der Scanrichtung bestimmt werden, in welcher der Retroreflektor von dem Laserstrahl scannend überfahren wird. In der Regel erfolgt das scannende Überfahren des Retroreflektors mit dem Laserstrahl entlang einer vorgegebenen, konstanten Scanrichtung, um das Strahlprofil des Laserstrahls entlang dieser Scanrichtung zu bestimmen. Die Bestimmung des Strahlprofils entlang einer einzigen Richtung kann ausreichend sein, da das Strahlprofil des Laserstrahls in der Regel eine um die zentrale Achse des Laserstrahls im Wesentlichen rotationssymmetrische Intensitätsverteilung aufweist.

Bei einer vorteilhaften Variante wird der Retroreflektor automatisiert in dem Bearbeitungsfeld der Scannereinrichtung angeordnet. Zu diesem Zweck kann der Retroreflektor an einer beweglichen Einrichtung angebracht werden, die in das Bearbeitungsfeld bewegt wird, um die Bestimmung des Strahlprofils durchzuführen und die wieder aus dem Bearbeitungsfeld entfernt wird, um die Bestrahlung von Pulverschichten zur Herstellung des dreidimensionalen Bauteils durchzuführen. Für die automatisierte Bewegung kann ein verfahrbares bzw. bewegliches Bauteil verwendet werden, welches beispielsweise für Automatisierungen oder dergleichen ohnehin in der Bearbeitungskammer vorgesehen ist. Bei dem Bauteil kann es sich um einen verschwenkbaren und/oder verschiebbaren Arm handeln, welcher den Retroreflektor in das Bearbeitungsfeld hinein und aus diesem heraus bewegt.

Bei einer Weiterbildung wird der Retroreflektor an einer beweglichen Einrichtung zum Auftragen von Pulverschichten in oder zumindest in die Nähe des Bearbeitungsfelds der Scannereinrichtung bewegt. In der Bearbeitungskammer befindet sich typischerweise eine Einrichtung, welche eine dünne Pulverschicht auf ein Pulverbett aufträgt, in das der bereits fertiggestellte Teil des dreidimensionalen Bauteils eingebettet ist. Die Einrichtung wird zum Auftragen einer jeweiligen Pulverschicht zumindest teilweise in das Bearbeitungsfeld der Scannereinrichtung bewegt, beispielsweise in einer linearen Bewegung, um das Pulvermaterial zu transportieren. Bei der Einrichtung kann es sich beispielsweise um einen Arm mit einem Schieber oder einer Rolle handeln, die Pulvermaterial aus einem Reservoir zu dem Träger bzw. zu dem oberhalb von dem Träger angeordneten Pulverbett transportiert. Der Arm kann in der Höhe (Z-Richtung) verstellbar sein, bspw. durch eine Linearbewegung in Z-Richtung, so dass dieser nach dem Auftragen über die Pulverschicht bewegt werden kann, ohne diese zu berühren. Der Arm kann zu diesem Zweck auch um eine z.B. horizontal verlaufende Rotationsachse drehbar sein.

Auf diese Weise kann die ohnehin in der Bearbeitungsmaschine vorhandene Einrichtung zum Auftragen von Pulverschichten auch für das Anordnen des Retroreflektors in dem Bearbeitungsfeld genutzt werden. In der Regel ist der Retroreflektor beim scannenden Überfahren durch den Laserstrahl in dem Bearbeitungsfeld ortsfest angeordnet, d.h. die Bewegung der Einrichtung zum Auftragen der Pulverschichten wird während des Bestimmens des Strahlprofils bzw. des scannenden Überfahrens durch den Laserstrahl gestoppt. Dies ist aber nicht zwingend erforderlich, d.h. der Retroreflektor kann ggf. auch während des Bestimmens des Strahlprofils über das Bearbeitungsfeld bewegt werden.

Bei einer weiteren Weiterbildung wird der Retroreflektor an einem Träger zum Aufbringen der Pulverschichten angebracht. Die Anordnung des Retroreflektors an dem Träger, typischerweise auf der Oberseite des Trägers, ist günstig, da der Träger in der Höhe (Z-Richtung) verstellbar ist, so dass dieser in oder in die Nähe des Bearbeitungsfelds bzw. der Bearbeitungsebene bewegt werden kann. Durch die Höhenverstellbarkeit des Trägers kann der Retroreflektor an jeweils unterschiedlichen Positionen in Z-Richtung angeordnet werden, um die Strahlkaustik des Laserstrahls zu vermessen. Da die Pulverschichten für die Herstellung des dreidimensionalen Bauteils auf den Träger aufgebracht werden, ist die Bestimmung des Strahlprofils mittels eines oder mehrerer auf dem Träger aufgebrachter Retroreflektor(en) jedoch in der Regel nicht während der Herstellung des dreidimensionalen Bauteils möglich.

Es versteht sich, dass mehrere Retroreflektoren auf dem Träger bzw. auf der Einrichtung zum Auftragen der Pulverschichten angebracht sein können, um das Strahlprofil an mehreren Positionen des Bearbeitungsfeldes zu bestimmen. Da der oder die Retroreflektoren ggf. ohnehin entlang einer Bewegungsrichtung der Einrichtung, an der diese angebracht sind, verschiebbar sind, ist es insbesondere günstig, wenn mehrere Retroreflektoren quer bzw. senkrecht zu dieser Bewegungsrichtung nebeneinander angeordnet sind. Beispielsweise können bei einer Einrichtung zum Auftragen der Pulverschichten, die in X-Richtung verschiebbar ist, mehrere Retroreflektoren in Y-Richtung und/oder in Z-Richtung nebeneinander angeordnet werden, um eine Bestimmung des Strahlprofils auch an mehreren Y-bzw. Z-Positionen in der Bearbeitungskammer durchführen zu können.

Bei einer weiteren Variante wird der Laserstrahl an einem Retroreflektor in Form eines dreidimensionalen Objekts in die Scannereinrichtung zurück reflektiert. Unter einem dreidimensionalen Objekt wird ein Objekt verstanden, das in allen drei Raumdimensionen eine Ausdehnung von mindestens 20 µm, bevorzugt von mindestens 50 µm, besonders bevorzugt von mindestens 100 µm, insbesondere von mindestens 1 mm aufweist. Die Erstreckung des Objekts in dem Bearbeitungsfeld bzw. in der Bearbeitungsebene kann mindestens so groß wie der Durchmesser des Laserstrahls in dem Bearbeitungsfeld, die Erstreckung bzw. der Durchmesser des dreidimensionalen Objekts kann aber auch kleiner sein als der Durchmesser des Laserstrahls in dem Bearbeitungsfeld, der typischerweise im Wesentlichen dem Fokusdurchmesser entspricht, der z.B. zwischen ca. 50 µm und ca. 100 µm liegen kann. Ist die Erstreckung des dreidimensionalen Objekts kleiner als der Durchmesser des Laserstrahls, kann nur ein Teilbereich des Strahlprofils des Laserstrahls an dem dreidimensionalen Objekt reflektiert werden, was typischerweise zu einer Erhöhung der Auflösung bei der Bestimmung des Strahlprofils führt. Grundsätzlich ist es daher günstig, wenn das dreidimensionale Objekt eine vergleichsweise geringe Erstreckung aufweist. Da der Laserstrahl den Retroreflektor scannend überfährt, kann auch in diesem Fall das gesamte Strahlprofil des Laserstrahls bestimmt werden.

Bei einer Weiterbildung wird der Laserstrahl an einem Retroreflektor in Form einer transparenten Kugel reflektiert, die bevorzugt einen Durchmesser von weniger als 5 mm aufweist und/oder die bevorzugt aus Quarzglas oder aus Saphir gebildet ist. Bei dieser Variante handelt es sich bei dem Retroreflektor um eine (kleine) transparente Kugel, die aus einem den Laserstrahl transmittierenden Material gebildet ist und die typischerweise einen Durchmesser in der Größenordnung von mehreren Mikrometern bis zu wenigen Millimetern, in der Regel weniger als 10 mm, bevorzugt von weniger als 5 mm aufweist. Der Durchmesser der transparenten Kugel kann beispielsweise zwischen ca. 0,5 mm und 5 mm liegen, wobei bei kleinerem Durchmesser der Kugel in der Regel eine höhere Auflösung bei der Bestimmung des Strahlprofils erreicht werden kann als bei einem größeren Durchmesser der Kugel. Die transparente Kugel wirkt als Retroreflektor, da diese einen Großteil des von einer weit entfernten Lichtquelle einfallenden Lichts auf einen Fleck hinter der hinteren Oberfläche der Kugel fokussiert, wobei durch den Unterschied im Brechungsindex zwischen der Kugel und der Umgebung, typischerweise Luft, die hintere Oberfläche der Kugel als Retroreflektor wirkt.

Bei der Verwendung eines nicht ortsauflösenden Detektors wird von diesem zwangsläufig nur in einem bestimmten Winkelbereich zurückreflektierte Laserstrahlung detektiert, wobei der Winkelbereich aufgrund der Anordnung des Detektors (in der Regel koaxial zum Strahlengang des Laserstrahls) mit der Einfalls- und Ausfallsrichtung des Laserstrahls auf den Retroreflektor überlagert ist. Die Auflösung bei der Bestimmung des Strahlprofils hängt daher bei der Verwendung einer Kugel als Retroreflektor neben der Größe bzw. dem Durchmesser der Kugel (s.o.) auch davon ab, wo der Fokus der in die Kugel eindringenden Laserstrahlung sich befindet: Liegt der Fokus aufgrund des Brechungsindexes des transparenten Materials der Kugel direkt auf der Rückseite der Kugel, wird die Laserstrahlung zu einem großen Teil in einen engen Winkelbereich um die Einfallsrichtung des Laserstrahls zurück reflektiert, so dass die Auflösung des Messverfahrens vergleichsweise gering ist. Ist der Brechungsindex der Kugel größer oder kleiner als der Wert, bei dem der Fokus sich direkt auf der Rückseite der Kugel befindet, so dass der Laserstrahl vor oder hinter der Rückseite der Kugel fokussiert wird, weitet sich die zurück reflektierte Laserstrahlung leicht auf, so dass jeweils nur ein Bruchteil der zurück reflektierten Laserstrahlung detektiert wird, der typischerweise im Wesentlichen zentrisch in die Kugel einfällt, so dass das Strahlprofil des Laserstahls beim scannenden Überfahren mit einer höheren Auflösung bestimmt werden kann.

Der Brechungsindex, bei dem der Fokus ungefähr an der Rückseite der Kugel liegt, liegt ungefähr bei n = 2,0. Bevorzugt ist die Kugel aus Quarzglas (SiO₂) oder aus Saphir (Al₂O₃) gebildet, da beide Materialien einen vergleichsweise geringen Brechungsindex aufweisen, so dass der Fokus des Laserstrahls sich in diesem Fall hinter der Rückseite der Kugel befindet. Insbesondere Quarzglas, welches über einen vergleichsweise großen Wellenlängenbereich einen vergleichsweise kleinen Brechungsindex von ungefähr n = 1,54 aufweist, hat sich als vorteilhaft für die Durchführung des Verfahrens erwiesen. Es versteht sich aber, dass auch andere Materialien, beispielsweise andere Gläser, als Kugel-Materialien verwendet werden können. Auch können ggf. Materialien, welche einen vergleichsweise großen Brechungsindex aufweisen, z.B. Diamant mit n = 2,42, als Materialien für die Kugel verwendet werden, da in diesem Fall der Fokus vor der Kugelrückseite liegt und die zurück reflektierte Laserstrahlung ebenfalls aufgeweitet wird.

Ein Retroreflektor in Form einer transparenten Kugel insbesondere aus den oben beschriebenen Materialien ermöglicht eine sehr präzise Bestimmung des Strahlprofils des Laserstrahls, da nur der Anteil des Laserstrahls, der durch den Kugelmittelpunkt verläuft, gerichtet in die Scannereinrichtung zurück reflektiert wird. Es versteht sich, dass ggf. auch dreidimensionale Objekte, die auf andere Weise, beispielsweise als Prismen oder dergleichen ausgebildet sind, als Retroreflektoren verwendet werden können, diese sollten aber sehr klein in Relation zum Durchmesser des Laserstrahls am Ort des Retroreflektors sein, da bei derartigen dreidimensionalen Objekten der weiter oben beschriebene Effekt der Aufweitung des Winkelbereichs der zurück reflektierten Laserstrahlung, welcher die Auflösung bei der Bestimmung des Strahlprofils erhöht, in der Regel nicht auftritt.

Bei einer Variante des Verfahrens wird zum zweidimensionalen Bestimmen des Strahlprofils des Laserstrahls der Retroreflektor von dem Laserstrahl mehrfach scannend überfahren. Um ein vollständiges zweidimensionales Strahlprofil des Laserstrahls zu erhalten, kann der Laserstrahl mehrfach mit geringfügigem lateralem Versatz scannend über den Retroreflektor bewegt werden. Durch ein solches zeilenweises Abscannen des Retroreflektors kann eine flächige, zweidimensionale Intensitätsverteilung des Laserstrahls aufgenommen werden.

Bei einer weiteren Variante umfasst das Verfahren zusätzlich: Verändern eines Abstands zwischen dem Retroreflektor und der Scannereinrichtung und/oder Verändern einer Fokusposition des Laserstrahls in Ausbreitungsrichtung des Laserstrahls, sowie erneutes Bestimmen des Strahlprofils des Laserstrahls durch Detektieren von Laserstrahlung, die beim scannenden Überfahren des Retroreflektors mit dem Laserstrahl in die Scannereinrichtung zurück reflektiert wird. In der Regel wird das Strahlprofil des Laserstrahls ein- oder zweidimensional in oder in der Nähe der Bearbeitungsebene bestimmt, die typischerweise der Fokusebene entspricht. Zusätzlich kann das Strahlprofil in mindestens einem weiteren Abstand von der Bearbeitungsebene bestimmt werden, um die Strahlkaustik, d.h. die Änderung des Strahlprofils in Ausbreitungsrichtung des Laserstrahls zu bestimmen. Bei der Veränderung des Abstands zwischen dem Retroreflektor und der Scannereinrichtung kann beispielsweise geprüft werden, in welchem Abstand von der Bearbeitungsebene der Durchmesser des Strahlprofils minimal ist. Die Position bzw. der Abstand von der Scannereinrichtung, an dem das Strahlprofil des Laserstrahls einen minimalen Durchmesser aufweist, entspricht der Fokusposition des Laserstrahls. Zur Vermessung der Strahlkaustik kann alternativ oder zusätzlich die Fokusposition des Laserstahls in Ausbreitungsrichtung mit Hilfe einer Fokussiereinrichtung verändert werden, wodurch das Strahlprofil am Ort des Retroreflektors sich verändert bzw. in Ausbreitungsrichtung verschiebt. Auf diese Weise kann ebenfalls eine Veränderung des Strahlprofils in Ausbreitungsrichtung des Laserstrahls bestimmt bzw. vermessen werden.

Ein weiterer Aspekt der Erfindung betrifft eine Bearbeitungsmaschine der eingangs genannten Art, umfassend: eine Bestrahlungseinrichtung mit einer Scannereinrichtung zum Positionieren eines Laserstrahls in einem Bearbeitungsfeld, eine Bearbeitungskammer, in der das Bearbeitungsfeld gebildet ist und die einen Träger zum Aufbringen der Pulverschichten aufweist, mindestens einen Retroreflektor, der in dem Bearbeitungsfeld der Scannereinrichtung anordenbar ist, einen Detektor zur Detektion von Laserstrahlung, die beim scannenden Überfahren des Retroreflektors mit dem Laserstrahl von dem Retroreflektor in die Scannereinrichtung zurück reflektiert wird, sowie eine Auswerteeinrichtung zum Bestimmen des Strahlprofils des Laserstrahls anhand der detektierten Laserstrahlung.

Wie weiter oben beschrieben wurde, dient die Bearbeitungsmaschine zum lokalen Aufschmelzen eines Pulverbetts bzw. einer Pulverschicht, die typischerweise in dem Bearbeitungsfeld der Scannereinrichtung angeordnet ist, um durch die so genannte "laser metal fusion" (LMF) eine Schicht des dreidimensionalen Bauteils zu erzeugen. Die Bestrahlungseinrichtung weist in der Regel zusätzlich zur Scannereinrichtung eine Fokussiereinrichtung auf, die zur Fokussierung des Laserstrahls in oder in der Nähe einer Bearbeitungsebene dient. Das Bearbeitungsfeld ist durch die maximalen Auslenkungen des bzw. der Scannerspiegel der Scannereinrichtung begrenzt. Die Fokussiereinrichtung kann adaptiv ausgebildet sein, um die Fokusposition in Ausbreitungsrichtung des Laserstrahls zu verändern. Die Bestrahlungseinrichtung weist zusätzlich auch eine Laserquelle beispielsweise in Form eines Faserlasers oder eines anderen Lasers auf. Die Bestimmung des Strahlprofils mit Hilfe des Retroreflektors kann sowohl für einen Bearbeitungs-Laserstrahl der Laserquelle, welcher zum Aufschmelzen der Pulverschichten verwendet wird, als auch für einen Pilot-Laserstrahl einer Pilotlaserquelle durchgeführt werden, welcher typischerweise eine deutlich geringere Leistung (und in der Regel eine andere Wellenlänge) aufweist als der Bearbeitungslaserstrahl.

Bei einer Ausführungsform umfasst die Bearbeitungsmaschine eine Bewegungseinrichtung zur Bewegung des mindestens einen Retroreflektors in das Bearbeitungsfeld der Scannereinrichtung (und aus dem Bearbeitungsfeld heraus). Die Bewegungseinrichtung ermöglicht es, den Retroreflektor automatisiert in das Bearbeitungsfeld der Scannereinrichtung einzubringen. Auf diese Weise kann erforderlichenfalls eine Bestimmung des Strahlprofils des Laserstrahls durchgeführt werden, während ein dreidimensionales Bauteil hergestellt wird, wobei zu diesem Zweck die Bearbeitung kurzfristig unterbrochen wird. Auf diese Weise kann eine kostengünstige, voll automatisierte Bestimmung des Strahlprofils des Laserspots in bzw. in der Nähe der Bearbeitungsebene an der Oberseite des Pulverbetts erfolgen. Wie weiter oben beschrieben wurde, kann zudem ggf. die Strahlkaustik sowie die Fokusposition bzw. die Lage der Fokusebene des Laserstrahls bestimmt werden. Mit Ausnahme des Retroreflektors sind alle Komponenten, die für die Bestimmung des Strahlprofils erforderlich sind, außerhalb der Bearbeitungskammer angeordnet, d.h. diese befinden sich weit von der eigentlichen Messposition entfernt.

Der Detektor ist bevorzugt koaxial zum Strahlengang des Laserstrahls in der Bestrahlungseinrichtung angeordnet, wobei die zur Scannereinrichtung zurück reflektierte Laserstrahlung über einen Strahlteiler, beispielsweise einen teiltransmissiven Umlenkspiegel, aus dem Strahlengang des Laserstrahls ausgekoppelt wird. Der Strahlteiler kann beispielsweise eine hochreflektierende dielektrische Beschichtung aufweisen, an der nur ein kleiner Anteil der Intensität der Laserstrahlung zu dem Detektor transmittiert (oder ggf. reflektiert) wird. Die zurück reflektierte Laserstrahlung wird typischerweise über eine Abbildungseinrichtung, z.B. über eine Linse, auf dem Detektor fokussiert bzw. auf diesen abgebildet. Die dielektrische Beschichtung des Strahlteilers kann für die Wellenlänge des Bearbeitungslaserstrahls und die Wellenlänge des Pilotlaserstrahls eine unterschiedliche Reflektivität bzw. Transmission aufweisen, um sicherzustellen, dass die jeweilige auf den Detektor auftreffende Intensität der zurück reflektierten Laserstrahlung in der Größenordnung des Messbereichs des Detektors liegt. Beispielsweise kann die dielektrische Beschichtung eine Reflektivität von 99,9 % für die Wellenlänge des Bearbeitungs-Laserstrahls und eine geringere Reflektivität von z.B. ca. 50 % für die Wellenlänge des Pilot-Laserstrahls aufweisen. Entsprechend werden ca. 0,1% der Intensität der zurück reflektierten Laserstrahlung des Bearbeitungs-Laserstrahls zum Detektor transmittiert, während ca. 50 % der Intensität der zurück reflektierten Laserstrahlung des Pilot-Laserstrahls, der in der Regel eine deutlich geringere Leistung als der Bearbeitungslaserstrahl aufweist, zu dem Detektor transmittiert werden.

Bei einer Weiterbildung ist die Bewegungseinrichtung zur Bewegung des mindestens einen Retroreflektors in das Bearbeitungsfeld der Scannereinrichtung als Einrichtung zum Auftragen von Pulverschichten ausgebildet. Beispielsweise kann es sich bei der Einrichtung um einen Arm handeln, an dem ein Schieber angebracht ist, um das Pulvermaterial zu dem Träger zu befördern und auf dessen Oberfläche bzw. auf dem Pulverbett zu verteilen.

Bei einer weiteren Ausführungsform ist der Retroreflektor an einem Träger zum Aufbringen der Pulverschichten angebracht. Wie weiter oben beschrieben wurde, ist der Träger in der Regel in Höhenrichtung, d.h. in Z-Richtung, verschiebbar, so dass der Retroreflektor durch Verschieben des Trägers an jeweils unterschiedlichen Positionen in Z-Richtung angeordnet werden kann, um die Strahlkaustik des Laserstrahls zu vermessen.

Bei einer weiteren Ausführungsform ist der Retroreflektor als dreidimensionales Objekt, bevorzugt als transparente Kugel, ausgebildet. Wie weiter oben beschrieben wurde, ist die Verwendung einer transparenten Kugel als Retroreflektor günstig, da diese die zurück reflektierte Laserstrahlung in der Regel etwas aufweitet, was sich günstig auf die Auflösung bei der Bestimmung des Strahlprofils auswirkt.

Bei einer Weiterbildung ist die transparente Kugel aus Quarzglas oder Saphir gebildet. Es versteht sich, dass die Kugel auch aus anderen Materialien gebildet sein kann, die einen geeigneten Brechungsindex aufweisen, so dass die zurück reflektierte Laserstrahlung auf einen Winkelbereich aufgeweitet wird, so dass das Strahlprofil mit höherer Auflösung detektiert werden kann.

Bei einer weiteren Weiterbildung weist die transparente Kugel einen Durchmesser von weniger als 5 mm auf. Wie weiter oben beschrieben wurde, kann die transparente Kugel einen Durchmesser in der Größenordnung von mehreren Mikrometern, z.B. 20 µm, bis zu wenigen Millimetern, in der Regel weniger als 10 mm, bevorzugt von weniger als 5 mm aufweisen.

Bei einer weiteren Ausführungsform ist der Detektor als (Foto-)Diode ausgebildet, d.h. es handelt sich bei dem Detektor nicht um einen ortsauflösenden Detektor. Die

Detektion der Intensität der zu der Scannereinrichtung zurück reflektierten Laserstrahlung mittels eines nicht ortsauflösenden Detektors ist ausreichend, da die Position des Laserstrahls in dem Bearbeitungsfeld mit Hilfe der Scannereinrichtung variiert werden kann. Ein Detektor in Form einer Diode kann zur Prozessbeobachtung bei der Herstellung des dreidimensionalen Bauteils bereits in der Bearbeitungsmaschine vorhanden sein, so dass dieser in vorteilhafter Weise zusätzlich für die Bestimmung des Strahlprofils des Laserstrahls eingesetzt werden kann. Eine (Foto-)Diode weist in der Regel einen Messbereich für die Leistung der auftreffenden (Laser-)Strahlung auf, der im mW-Bereich liegt, wobei verstärkte Mess-Dioden auch noch eine Leistung der auftreffenden (Laser-)Strahlung im Bereich von µW messen können. Wie weiter oben beschrieben wurde, können beispielsweise die Eigenschaften eines Strahlteilers, der zur Auskopplung der zurück reflektierten Laserstrahlung verwendet wird, an den Messbereich der Diode angepasst werden, um deren Empfindlichkeit optimal auszunutzen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Ausführungsbeispiels einer Bearbeitungsmaschine zur Herstellung von dreidimensionalen Bauteilen mit einem Retroreflektor in Form einer transparenten Kugel zum Bestimmen des Strahlprofils eines Laserstrahls,
- Fig. 2a,b: Darstellungen eines Top-Hat Strahlprofils und eines Gauß-förmigen Strahlprofils sowie einer zugehörigen Intensitätsverteilung der Laserstrahlung, die beim scannenden Überfahren des Retroreflektors von Fig. 1 mit dem Laserstrahl in die Scannereinrichtung zurück reflektiert wurde, sowie
- Fig. 3: eine Darstellung der Höhenlinien eines zweidimensionalen Gauß-förmigen Strahlprofils mit zwei entlang von zwei zueinander senkrechten Richtungen aufgenommenen Gauß-förmigen eindimensionalen Intensitätsverteilungen.

In der folgenden Beschreibung der Zeichnungen werden für gleiche bzw. funktionsgleiche Bauteile identische Bezugszeichen verwendet.

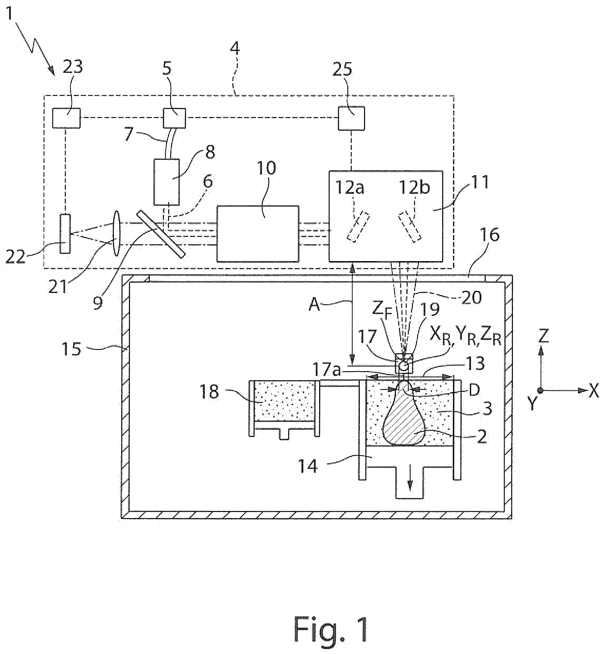

Fig. 1 zeigt einen beispielhaften Aufbau einer Bearbeitungsmaschine 1 zum Herstellen eines dreidimensionalen Bauteils 2 durch Bestrahlen von Pulverschichten 3, die in dem in Fig. 1 gezeigten Beispiel übereinander liegend angeordnet sind und ein Pulverbett bilden, in welches das dreidimensionale Bauteil 2 eingebettet ist. Die Bearbeitungsmaschine 1 weist eine Bestrahlungseinrichtung 4 auf, die eine Laserquelle 5 in Form eines Faserlasers zur Erzeugung eines Laserstrahls 6 aufweist, der über ein Lichtleitkabel 7 und eine Kollimationseinrichtung 8 auf einen Umlenkspiegel 9 geführt wird. Bei dem Laserstrahl 6 handelt es sich im gezeigten Beispiel um einen Bearbeitungs-Laserstrahl mit hoher Leistung, der für die Bestrahlung bzw. zum lokalen Aufschmelzen der Pulverschichten 3 verwendet wird. Bei dem Laserstrahl 6 kann es sich alternativ um einen Pilot-Laserstrahl handeln, der ebenfalls von der Laserquelle 5 in Form des Faserlasers erzeugt wird. Im gezeigten Beispiel weist der Bearbeitungs-Laserstrahl 6 eine Wellenlänge auf, die sich von der Wellenlänge des Pilot-Laserstrahls unterscheidet. Der Umlenkspiegel 9 weist bei dem in Fig. 1 gezeigten Beispiel eine auf ein plattenförmiges Quarzglas-Substrat aufgebrachte dielektrische Beschichtung mit einer Reflektivität von mehr als ca. 99,9 % für die Wellenlänge des Bearbeitungs-Laserstrahls 6 und eine Reflektivität von ca. 30 % bis ca. 80 % für die Wellenlänge des Pilot-Laserstrahls auf, so dass der Bearbeitungs-Laserstrahl 6 an dem Umlenkspiegel 9 im Wesentlichen vollständig zu einer Fokussiereinrichtung 10 der Bestrahlungseinrichtung 4 umgelenkt wird.

Der Laserstrahl 6 durchläuft nach der Fokussiereinrichtung 10 eine Scannereinrichtung 11, die zwei Scannerspiegel 12a, 12b in Form von Galvanometer-Spiegeln aufweist. Die Scannereinrichtung 10 dient zur Positionierung des Laserstrahls 6 in einem Bearbeitungsfeld 13 der Scannereinrichtung 10, dessen Ausdehnung bei dem in Fig. 1 gezeigten Beispiel im Wesentlichen der lateralen Erstreckung des Pulverbetts bzw. der Pulverschichten 3 entspricht. Das Bearbeitungsfeld 13 ist durch die maximale Auslenkung der beiden Scannerspiegel 12a, 12b begrenzt. Das Bearbeitungsfeld 13 ist in bzw. in der Nähe einer Bearbeitungsebene in Form einer XY-Ebene eines XYZ-Koordinatensystems gebildet, in der sich die oberste der Pulverschichten 3 bzw. die Oberseite des Pulverbetts befindet. Die Fokussiereinrichtung 10 dient zur Fokussierung des Laserstrahls 6 in der Bearbeitungsebene.

Wie in Fig. 1 ebenfalls zu erkennen ist, sind die Pulverschichten 3 auf einem Träger 14 in Form einer in Z-Richtung verschiebbaren Grundplatte aufgebracht. Der Träger 14 ist in einer Bearbeitungskammer 15 mit einem Fenster 16 angeordnet, durch das der Laserstrahl 6 in die Bearbeitungskammer 15 eingestrahlt wird. Da das Bearbeitungsfeld 13 der Scannereinrichtung 11, in dem das Pulvermaterial aufgeschmolzen wird, bei der Herstellung des dreidimensionalen Bauteils 2 in konstantem Abstand zur Scannereinrichtung 11 verbleibt, wird zum Auftragen einer neuen Pulverschicht 3 der Träger 14 um die Dicke einer Pulverschicht 3 abgesenkt, wie in Fig. 1 durch einen Pfeil angedeutet ist.

Neues Pulvermaterial wird mit Hilfe einer Einrichtung 17 zum Auftragen von (neuen) Pulverschichten 3 aus einem ebenfalls in der Bearbeitungskammer 15 angeordneten Pulverreservoir 18 entnommen. Die Einrichtung 17 zum Auftragen von neuen Pulverschichten 3 ist bei dem in Fig. 1 gezeigten Beispiel in Form eines verschiebbaren Arms ausgebildet, an dessen Unterseite ein Schieber 17a angebracht bzw. gehalten ist, um Pulvermaterial aus dem Pulverreservoir 18 in den Bereich der Pulverschichten 3 bzw. an die Oberseite des Pulverbetts zu verbringen, welches sich oberhalb des Trägers 14 in dem diesen umgebenden Bauzylinder befindet.

Bei dem in Fig. 1 gezeigten Beispiel ist an einer leicht geneigten Fläche an der Oberseite der als verschiebbarer Arm ausgebildeten Einrichtung 17 zum Auftragen der Pulverschichten 3, der sich im gezeigten Beispiel in Y-Richtung, d.h. senkrecht zur Zeichenebene erstreckt, ein Retroreflektor 19 in Form eines dreidimensionalen Objekts, genauer gesagt einer transparenten Kugel aus Quarzglas angebracht. Es versteht sich, dass der Retroreflektor 19 auch an anderer Stelle an dem Arm angebracht bzw. befestigt werden kann. Alternativ kann die Retroreflektor-Kugel 19 auch aus einem anderen transparenten Material, beispielsweise aus einer anderen Art von Glas, aus Saphir oder aus Diamant gebildet sein. Die Retroreflektor-Kugel 19 weist im gezeigten Beispiel einen Durchmesser D von ca. 2 mm auf und reflektiert Laserstrahlung 20, die einen Anteil von ungefähr 4-5 % der Intensität des Laserstrahls 6 ausmacht, zurück in die Scannereinrichtung 11. Eine höhere Reflektivität der Retroreflektor-Kugel 19 von deutlich über 5 % ist ggf. ungünstig, da dies zu einem ungewollten Aufheizen der Retroreflektor-Kugel 19 oder ggf. der Scannereinrichtung 11 führen kann. Der Durchmesser D der Retroreflektor-Kugel 19 muss nicht zwingend im Bereich von mehreren Millimetern liegen, sondern kann z.B. zwischen 0,5 mm und 5 mm betragen, wobei der Durchmesser D ggf. auch kleiner ausfallen kann und beispielsweise im Bereich von Mikrometern, in der Regel bei 20 µm oder darüber liegen kann.

Bei dem in Fig. 1 gezeigten Beispiel trifft der Laserstrahl 6 im Wesentlichen senkrecht zur XY-Ebene, in der auch die jeweiligen Pulverschichten 3 verlaufen, auf den Retroreflektor 19 auf, es versteht sich aber, dass an dem Retroreflektor 19 auch bei einer von einem senkrechten Einfall abweichenden Einfallsrichtung des Laserstrahls 6 ein erheblicher Strahlungsanteil des Laserstrahls 6 von typischerweise mehr als ca. 4 % zur Scannereinrichtung 11 zurück reflektiert wird. Die Intensität der rückreflektierten Laserstrahlung 20 ist bei dem in Fig. 1 gezeigten Aufbau im Wesentlichen unabhängig vom Einfallswinkel, der über das gesamte Bearbeitungsfeld 13 beispielsweise um ca. +/- 25° vom senkrechten Einfall abweicht, wobei die maximale Abweichung vom senkrechten Einfall am Rand des Bearbeitungsfeldes 13 auftritt.

Die zurückreflektierte Laserstrahlung 20 durchläuft die Scannereinrichtung 11 sowie die Fokussiereinrichtung 10 in umgekehrter Richtung zum Laserstrahl 6 und trifft auf den Umlenkspiegel 9. An dem Umlenkspiegel 9 wird ein geringer Anteil von ca. 0,1 % der zurückreflektierten Laserstrahlung 20 transmittiert und mit Hilfe einer Abbildungseinrichtung 21, die bei dem in Fig. 1 gezeigten Beispiel als Linse ausgebildet ist, auf einen Detektor 22 in Form einer Fotodiode abgebildet bzw. fokussiert. Der Detektor 22 bzw. die Fotodiode ist koaxial zum Strahlengang des Laserstrahls 6 bzw. in der Verlängerung des Strahlengangs des Laserstrahls 6 angeordnet. Im gezeigten Beispiel weist der (Bearbeitungs-)Laserstrahl 6 eine vergleichsweise geringe Leistung von ca. 50 W auf, von denen ca. 5 %, d.h. ca. 1 W, an dem Retroreflektor 19 zurück reflektiert werden. Ein Leistungs-Anteil von ca. 0,1 % der zurück reflektierten Laserstrahlung 20, d.h. ca. 1 mW, wird an dem Umlenkspiegel 9 transmittiert und trifft auf den Detektor 22. Die Leistung im Bereich von mW entspricht ungefähr dem Messbereich der Fotodiode. Der Pilot-Laserstrahl weist eine deutlich geringere Leistung auf, von der an dem Umlenkspiegel 9 aber ein vergleichsweise großer Anteil von ca. 50 % transmittiert wird, so dass auch in diesem Fall die von dem Detektor 22 detektierte Leistung im mW-Bereich und somit im Messbereich der Fotodiode liegt.

Bei dem in Fig. 1 gezeigten Beispiel wird der Laserstrahl 6 entlang einer Scanrichtung, die mit der X-Richtung übereinstimmt, über den Retroreflektor 19 bewegt, d.h. der Laserstrahl 6 überfährt den Retroreflektor 19 in einer scannenden Bewegung in X-Richtung. Der Detektor 22 detektiert die Intensität I der Laserstrahlung 20, die hierbei von der Retroreflektor-Kugel 19 in die Scannereinrichtung 11 zurück reflektiert wird.

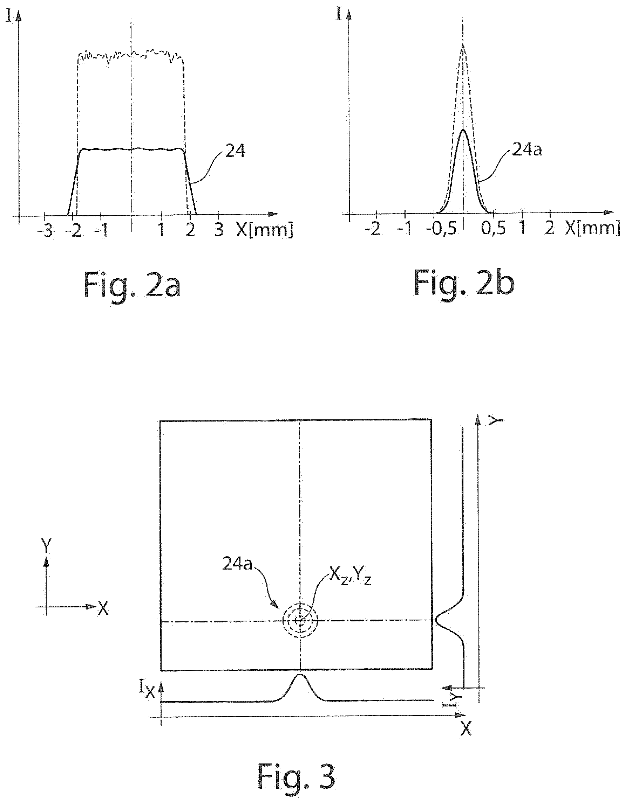

**Fig. 2a** zeigt ein Strahlprofil 24 des Laserstrahls 6 in X-Richtung, welches beim scannenden Überfahren der Retroreflektor-Kugel 19 von einer mit dem Detektor 22 in Verbindung stehenden Auswerteeinrichtung 23 bestimmt bzw. aufgenommen wurde. Wie in Fig. 2a zu erkennen ist, entspricht das mit Hilfe des Detektors 22 bestimmte Strahlprofil 24 im Wesentlichen der in Fig. 2a mit einer durchgezogenen Linie dargestellten Intensitätsverteilung des Laserstrahls 6 im Bereich der Bearbeitungsebene, die mittels einer Berechnung bzw. einer numerischen Simulation bestimmt wurde.

**Fig. 2b** zeigt eine zu Fig. 2a analoge Darstellung, bei welcher die Retroreflektor-Kugel 19 mit einem Laserstrahl 6 mit Gauß-förmigem Strahlprofil scannend überfahren wurde. Wie in Fig. 2b zu erkennen ist, wird mit Hilfe des Detektors 22 bzw. mit Hilfe der Auswerteeinrichtung 23 ein Gauß-förmiges Strahlprofil 24a bestimmt, welches annähernd proportional zur in Fig. 2b ebenfalls dargestellten Intensitätsverteilung des Laserstrahls 6 in der Bearbeitungsebene ist.

Wie anhand von Fig. 2a,b zu erkennen ist, entspricht das jeweilige Strahlprofil 24, 24a des Laserstrahls 6, welches mit Hilfe der zurück reflektieren Laserstrahlung 20 bestimmt wurde, sehr genau dem in der Laserquelle 5 eingestellten bzw. vorgegebenen Top-Hat- bzw. Gauß-förmigen Strahlprofil. Das Strahlprofil 24, 24a des Laserstrahls 6 lässt sich somit mit Hilfe der Retroreflektor-Kugel 19 mit hoher Genauigkeit bestimmen.

Um das gesamte zweidimensionale Gauß-förmige Strahlprofil 24a des Laserstrahls 6 zu bestimmen bzw. aufzunehmen, kann der Laserstrahl 6 den Retroreflektor 19 mehrfach in X-Richtung scannend überfahren, wobei der Laserstrahl 6 bei jedem Scanvorgang jeweils um den gleichen Betrag in X-Richtung lateral versetzt wird, so dass die Retroreflektor-Kugel zeilenweise in X-Richtung abgescannt wird. Für die Steuerung der Bewegung des Laserstrahls 6 über das Bearbeitungsfeld 13 ist in der Bestrahlungseinrichtung 4 eine Steuerungseinrichtung 25 vorgesehen. Die Steuerungseinrichtung 25 dient zur Steuerung der Winkelstellungen der beiden Scannerspiegel 12a,b, um den Laserstrahl 6 an einer gewünschten Position in dem Bearbeitungsfeld 13 bzw. in der Bearbeitungsebene zu positionieren.

Wie in **Fig. 3** zu erkennen ist, wird durch das Scannen der Retroreflektor-Kugel 19 eine zweidimensionale Intensitätsverteilung bzw. ein zweidimensionales Strahlprofil 24a in XY-Richtung bestimmt, dessen Höhenlinien in Fig. 3 in Form von konzentrischen Kreisen dargestellt sind. Anhand des zweidimensionalen Strahlprofils 24a kann die Zentrums-Position X_{z}, Y_{z} der Retroreflektor-Kugel 19 als Mittelpunkt der konzentrischen Kreise identifiziert und somit die Position der Strahlachse des Laserstrahls 6 bestimmt werden. Anhand des in Fig. 3 gezeigten zweidimensionalen Strahlprofils 24a kann auch ein eindimensionales Strahlprofil entlang einer beliebigen Richtung in der XY-Ebene bestimmt werden, beispielsweise die durch die Zentrums-Position X_{z}, Y_{z} verlaufenden eindimensionalen Strahlprofile in X-Richtung sowie in Y-Richtung.

Bei dem in Fig. 1 gezeigten Beispiel kann durch eine Bewegung der Retroreflektor-Kugel 19 in Z-Richtung mit Hilfe der Einrichtung 17 zum Auftragen der Pulverschichten 3 der Abstand A zwischen der Scannereinrichtung 11 und der Retroreflektor-Kugel 19 bzw. die Z-Position Z_{R} des Retroreflektors 19 verändert werden. Das Strahlprofil 24, 24a des Laserstrahls 6 kann daher auf die weiter oben beschriebene Weise an mehreren Positionen in Z-Richtung bestimmt werden, so dass die Strahlkaustik, d.h. die Veränderung des Strahlprofils 24, 24a des Laserstrahls 6 in Z-Richtung, bestimmt werden kann. Durch einen Vergleich der Größe bzw. der Durchmesser von mehreren Strahlprofilen 24, 24a an unterschiedlichen XY-Ebenen in Z-Richtung kann die Fokusposition des Laserstrahls 6 in Z-Richtung bestimmt werden. Die Fokusposition des Laserstrahls 6 in Z-Richtung entspricht hierbei demjenigen Strahlprofil 24, 24a, welches einen minimalen Durchmesser aufweist. Die Veränderung des Strahlprofils 24, 24a des Laserstrahls 6 in Z-Richtung kann auch gemessen werden, indem mit Hilfe der Fokussiereinrichtung 10 die Fokusposition Z_{F} des Laserstrahls 6 in Ausbreitungsrichtung des Laserstrahls 6 (im gezeigten Beispiel in Z-Richtung) verändert wird.

Es ist vorteilhaft, wenn das Strahlprofil 24, 24a des Laserstrahls 6 an mehreren Positionen in dem Bearbeitungsfeld 13 bestimmt werden kann. Zu diesem Zweck kann der Retroreflektor 19 in dem Bearbeitungsfeld 13 bewegt, insbesondere verschoben werden, um die XY-Position X_{R}, Y_{R} der Retroreflektor-Kugel 19 zu variieren. Alternativ oder zusätzlich können mehrere Retroreflektoren 19 in Form von dreidimensionalen Objekten, z.B. in Form von transparenten Kugeln, an der Einrichtung 17 zum Auftragen der Pulverschichten 3 angebracht sein, an denen jeweils die Bestimmung des Strahlprofils 24, 24a erfolgen kann.

Bei dem in Fig. 1 gezeigten Beispiel verläuft die Bewegungsachse der Einrichtung 17 zum Transport von Pulvermaterial in X-Richtung, so dass die Veränderung der Position X_{R} der Retroreflektor-Kugel 19 in X-Richtung problemlos möglich ist. Um das Strahlprofil 24, 24a an mehreren unterschiedlichen Positionen in dem Bearbeitungsfeld 13 in aufzunehmen, können mehrere Retroreflektoren 19 in Form von dreidimensionalen Objekten, z.B. in Form von transparenten Kugeln, in beabstandet zueinander entlang der Einrichtung 17 zum Auftragen der Pulverschichten 3 angeordnet sein. Ebenfalls ist es möglich, mehrere Retroreflektoren 19 an unterschiedlichen Positionen in Z-Richtung an der Einrichtung 17 zum Auftragen der Pulverschichten 3 anzubringen, um eine Vermessung des Strahlprofils 24, 24a an unterschiedlichen Positionen in Z-Richtung zu ermöglichen. Zusätzlich oder alternativ zur Anbringung eines oder mehrerer Retroreflektoren 19 an der Einrichtung 17 zum Auftragen der Pulverschichten 3 kann bzw. können diese auch an anderer Stelle in der Bearbeitungskammer 15 angebracht werden, beispielsweise an dem Träger 14, genauer gesagt an der Oberseite des Trägers 14, in der Regel am äußeren Rand des Bearbeitungsfeldes 13. Durch die Bewegung des Trägers 14 in Z-Richtung kann in diesem Fall ebenfalls das Strahlprofil 24, 24a des Laserstrahls 6 an unterschiedlichen Positionen in Z-Richtung bestimmt werden. Durch die Anordnung von mehreren Retroreflektoren 19 auf dem Träger 14 kann das Strahlprofil 24, 24a ebenfalls an mehreren unterschiedlichen Positionen in X-Richtung bzw. in bestimmt werden.

Zusammenfassend kann bei der weiter oben beschriebenen Bearbeitungsmaschine 1 insbesondere durch das Anbringen eines Retroreflektors 19 an der Einrichtung 17 zum Auftragen der Pulverschichten 3, d.h. mit minimalem bautechnischem Aufwand, eine automatische Bestimmung des Strahlprofils 24, 24a des Laserstrahls 6 erfolgen. Die Bestimmung des Strahlprofils 24, 24a auf die weiter oben beschriebene Weise lässt sich ohne Rüstzeit innerhalb von wenigen Sekunden durchführen und ist daher auch geeignet, vor, während oder nach dem Auftragen einer neuen Pulverschicht 3 bei der Herstellung eines dreidimensionalen Bauteils 2 durchgeführt zu werden. Gegebenenfalls kann die Bestimmung des Strahlprofils 24, 24a während des Bewegens der Einrichtung 17 zum Auftragen von Pulverschichten 3 in das Bearbeitungsfeld 13 hinein oder beim Bewegen der Einrichtung 17 aus dem Bearbeitungsfeld 13 heraus durchgeführt werden. Anhand des auf die weiter oben beschriebene Weise bestimmten Strahlprofils 24, 24a lassen sich insbesondere auch Rückschlüsse auf den Zustand der in der Bestrahlungseinrichtung 4 verwendeten Optiken ziehen. Insbesondere kann die Steuerungseinrichtung 25 auf die Laserquelle 5 oder ggf. auf (nicht gezeigte) strahlformende optische Elemente der Bestrahlungseinrichtung 4 einwirken, um erforderlichenfalls das Strahlprofil 24, 24a des auf das Bearbeitungsfeld 13 eingestrahlten Laserstrahls 6 zu korrigieren bzw. um dieses an ein gewünschtes Strahlprofil anzupassen.

## Patentansprüche

1. Verfahren zum Bestimmen eines Strahlprofils (24, 24a) eines Laserstrahls (6), der mittels einer Scannereinrichtung (11) in einem Bearbeitungsfeld (13) positioniert wird,
umfassend:
Anordnen mindestens eines Retroreflektors (19) in dem Bearbeitungsfeld (13) der Scannereinrichtung (11), das in einer Bearbeitungskammer (15) zum Bestrahlen von Pulverschichten (3) gebildet ist,
Detektieren von Laserstrahlung (20), die beim scannenden Überfahren des Retroreflektors (19) mit dem Laserstrahl (6) in die Scannereinrichtung (11) zurück reflektiert wird, sowie
Bestimmen des Strahlprofils (24, 24a) des Laserstrahls (6) anhand der beim scannenden Überfahren des Retroreflektors (19) detektierten Laserstrahlung (20).

2. Verfahren nach Anspruch 1, bei dem der Retroreflektor (19) automatisiert in dem Bearbeitungsfeld (13) der Scannereinrichtung (11) angeordnet wird.

3. Verfahren nach Anspruch 2, bei dem der Retroreflektor (19) an einer beweglichen Einrichtung (17) zum Auftragen der Pulverschichten (3) in das Bearbeitungsfeld (13) der Scannereinrichtung (11) bewegt wird.

4. Verfahren nach einem der vorhergehenden Ansprüche, bei dem der Retroreflektor (19) an einem Träger (14) zum Aufbringen der Pulverschichten (3) angebracht wird.

5. Verfahren nach einem der vorhergehenden Ansprüche, bei dem der Laserstrahl (6) an einem Retroreflektor in Form eines dreidimensionalen Objekts (19) in die Scannereinrichtung (11) zurück reflektiert wird.

6. Verfahren nach Anspruch 5, bei dem der Laserstrahl (6) an einem Retroreflektor in Form einer transparenten Kugel (19) in die Scannereinrichtung (11) zurück reflektiert wird.

7. Verfahren nach einem der vorhergehenden Ansprüche, bei dem zum Bestimmen des zweidimensionalen Strahlprofils (24a) des Laserstrahls (6) der Retroreflektor (19) von dem Laserstrahl (6) mehrfach scannend überfahren wird.

8. Verfahren nach einem der vorhergehenden Ansprüche, weiter umfassend: Verändern eines Abstands (A) zwischen dem Retroreflektor (19) und der Scannereinrichtung (11) und/oder Verändern einer Fokusposition (Z_{F}) in Ausbreitungsrichtung des Laserstrahls (6), sowie erneutes Bestimmen des Strahlprofils (24, 24a) des Laserstrahls (6) durch Detektieren von Laserstrahlung (20), die beim scannenden Überfahren des Retroreflektors (19) mit dem Laserstrahl (6) in die Scannereinrichtung (11) zurück reflektiert wird.

9. Bearbeitungsmaschine (1), umfassend:
eine Bestrahlungseinrichtung (4) mit einer Scannereinrichtung (11) zum Positionieren eines Laserstrahls (6) in einem Bearbeitungsfeld (13),
eine Bearbeitungskammer (15), in der das Bearbeitungsfeld (13) gebildet ist und
die einen Träger (14) zum Aufbringen von Pulverschichten (3) aufweist,
mindestens einen Retroreflektor (19), der in dem Bearbeitungsfeld (13) der Scannereinrichtung (11) anordenbar ist,
einen Detektor (22) zur Detektion von Laserstrahlung (20), die beim scannenden Überfahren des Retroreflektors (19) mit dem Laserstrahl (6) von dem Retroreflektor (19) in die Scannereinrichtung (11) zurück reflektiert wird, sowie eine Auswerteeinrichtung (23) zum Bestimmen des Strahlprofils (24, 24a) des Laserstrahls (6) anhand der detektierten Laserstrahlung (20).

10. Bearbeitungsmaschine nach Anspruch 9, weiter umfassend: eine Bewegungseinrichtung (17) zur Bewegung des mindestens einen Retroreflektors (19) in das Bearbeitungsfeld (13) der Scannereinrichtung (11).

11. Bearbeitungsmaschine nach Anspruch 10, bei der die Bewegungseinrichtung zur Bewegung des mindestens einen Retroreflektors (19) in das Bearbeitungsfeld (13) der Scannereinrichtung (11) als Einrichtung (17) zum Auftragen der Pulverschichten (3) ausgebildet ist.

12. Bearbeitungsmaschine nach einem der Ansprüche 9 bis 11, bei welcher der Retroreflektor (19) an einem Träger (14) zum Aufbringen der Pulverschichten (3) angebracht ist.

13. Bearbeitungsmaschine nach einem der Ansprüche 9 bis 12, bei welcher der Retroreflektor in Form eines dreidimensionalen Objekts (19) ausgebildet ist.

14. Bearbeitungsmaschine nach Anspruch 13, bei welcher der Retroreflektor in Form einer transparenten Kugel (19) ausgebildet ist.

15. Bearbeitungsmaschine nach Anspruch 14, bei welcher die transparente Kugel (19) aus Quarzglas oder aus Saphir gebildet ist.

16. Bearbeitungsmaschine nach einem der Ansprüche 13 bis 15, bei welcher die transparente Kugel (19) einen Durchmesser (D) von weniger als 5 mm aufweist.

17. Bearbeitungsmaschine nach einem der Ansprüche 9 bis 16, bei welcher der Detektor als Diode (22) ausgebildet ist.

## Claims

1. A method for determining a beam profile (24, 24a) of a laser beam (6), which is positioned in a processing field (13) by means of a scanner device (11),
comprising:
arranging at least one retroreflector (19) in the processing field (13) of the scanner device (11), which is formed in a processing chamber (15) for irradiating powder layers (3), detecting laser radiation (20) which is reflected back into the scanner device (11) as the laser beam (6) is passed over the retroreflector (19) in a scanning manner, and
determining the beam profile (24, 24a) of the laser beam (6) by means of the laser radiation (20) detected as the retroreflector (19) is passed over in a scanning manner.

2. The method according to Claim 1, in which the retroreflector (19) is arranged in an automated manner in the processing field (13) of the scanner device (11).

3. The method according to Claim 2, in which the retroreflector (19) is moved into the processing field (13) of the scanner device (11) on a movable device (17) for applying the powder layers (3).

4. The method according to one of the preceding claims, in which the retroreflector (19) is mounted on a carrier (14) for applying the powder layers (3).

5. The method according to one of the preceding claims, in which the laser beam (6) is reflected on a retroreflector in the form of a three-dimensional object (19) back into the scanner device (11).

6. The method according to Claim 5, in which the laser beam (6) is reflected on a retroreflector in the form of a transparent ball (19) back into the scanner device (11).

7. The method according to one of the preceding claims, in which the laser beam (6) is repeatedly passed over the retroreflector (19) in a scanning manner for determining the two-dimensional beam profile (24a) of the laser beam (6).

8. The method according to one of the preceding claims, further comprising:
changing a distance (A) between the retroreflector (19) and the scanner device (11) and/or
changing a focus position (Z_{F}) in the direction of propagation of the laser beam (6), as well as determining again the beam profile (24, 24a) of the laser beam (6) by detecting laser radiation (20) which is reflected back into the scanner device (11) as the laser beam (6) is passed over the retroreflector (19) is in a scanning manner.

9. A processing machine (1), comprising:
an irradiation device (4) having a scanner device (11) for positioning a laser beam (6) in a processing field (13), a processing chamber (15), in which the processing field (13) is formed and which includes a carrier (14) for applying the powder layers (3), at least one retroreflector (19), which is positionable in the processing field (13) of the scanner device (11),
a detector (22) for detecting laser radiation (20), which is reflected back into the scanner device (11) as the laser beam (6) is passed over the retroreflector (19) in a scanning manner, as well as an evaluation unit (23) for determining the beam profile (24, 24a) of the laser beam (6) using the detected laser radiation (20).

10. The processing machine according to Claim 9, further comprising: a movement device (17) for moving the at least one retroreflector (19) into the processing field (13) of the scanner device (11).

11. The processing machine according to Claim 10, in which the movement device for moving the at least one retroreflector (19) into the processing field (13) of the scanner device (11) is designed as a device (17) for applying the powder layers (3).

12. The processing machine according to one of Claims 9 through 11, in which the retroreflector (19) is mounted on a carrier (14) for applying the powder layers (3).

13. The processing machine according to one of Claims 9 through 12, in which the retroreflector is designed in the form of a three-dimensional object (19).

14. The processing machine according to Claim 13, in which the retroreflector is designed in the form of a transparent ball (19).

15. The processing machine according to Claim 14, in which the transparent ball (19) is formed from quartz glass or from sapphire.

16. The processing machine according to one of Claims 13 through 15, in which the transparent ball (19) has a diameter (D) of less than 5 mm.

17. The processing machine according to one of Claims 9 through 16, in which the detector is designed as a diode (22).

## Revendications

1. Procédé pour déterminer un profil de rayon (24, 24a) d'un rayon laser (6), lequel est positionné dans un champ d'usinage (13) par l'intermédiaire d'un dispositif de balayage (11),
comprenant :
la disposition d'au moins un rétroréflecteur (19) dans le champ d'usinage (13) du dispositif de balayage (11),
lequel est formé dans une chambre d'usinage (15) servant à l'irradiation de couches de poudre (3),
la détection du rayonnement laser (20) qui est renvoyé par réflexion dans le dispositif de balayage (11) lors du franchissement par balayage du rétroréflecteur (19) par le rayon laser (6), et
la détermination du profil de rayon (24, 24a) du rayon laser (6) à l'aide du rayonnement laser (20) détecté lors du franchissement par balayage du rétroréflecteur (19).

2. Procédé selon la revendication 1, avec lequel le rétroréflecteur (19) est disposé de manière automatisée dans le champ d'usinage (13) du dispositif de balayage (11) .

3. Procédé selon la revendication 2, avec lequel le rétroréflecteur (19) est déplacé dans le champ d'usinage (13) du dispositif de balayage (11) sur un dispositif (17) servant à appliquer les couches de poudre (3).

4. Procédé selon l'une des revendications précédentes, avec lequel le rétroréflecteur (19) est monté sur un élément porteur (14) servant à appliquer les couches de poudre (3).

5. Procédé selon l'une des revendications précédentes, avec lequel le rayon laser (6) est renvoyé par réflexion dans le dispositif de balayage (11) sur un rétroréflecteur sous la forme d'un objet tridimensionnel (19) .

6. Procédé selon la revendication 5, avec lequel le rayon laser (6) est renvoyé par réflexion dans le dispositif de balayage (11) sur un rétroréflecteur sous la forme d'une sphère transparente (19).

7. Procédé selon l'une des revendications précédentes, avec lequel le rétroréflecteur (19) est franchi plusieurs fois par balayage par le rayon laser (6) en vue de déterminer le profil de rayon bidimensionnel (24a) du rayon laser (6).

8. Procédé selon l'une des revendications précédentes, comprenant en outre : la modification d'un écart (A) entre le rétroréflecteur (19) et le dispositif de balayage (11) et/ou la modification d'une position de point focal (Z_{F}) dans la direction de propagation du rayon laser (6) et une nouvelle détermination du profil de rayon (24, 24a) du rayon laser (6) par détection du rayonnement laser (20) qui est renvoyé par réflexion dans le dispositif de balayage (11) lors du franchissement par balayage du rétroréflecteur (19) avec le rayon laser (6).

9. Machine d'usinage (1), comprenant :
un dispositif d'usinage (4) pourvu d'un dispositif de balayage (11) servant à positionner un rayon laser (6) dans un champ d'usinage (13),
une chambre d'usinage (15) dans laquelle est formé le champ d'usinage (13) et qui possède un élément porteur (14) servant à appliquer des couches de poudre (3),
au moins un rétroréflecteur (19) qui peut être disposé dans le champ d'usinage (13) du dispositif de balayage (11),
un détecteur (22) destiné à détecter le rayonnement laser (20) qui est renvoyé par réflexion par le rétroréflecteur (19) dans le dispositif de balayage (11) lors du franchissement par balayage du rétroréflecteur (19) avec le rayon laser (6), et
un dispositif d'évaluation (23) destiné à déterminer le profil de rayon (24, 24a) du rayon laser (6) à l'aide du rayonnement laser (20) détecté.

10. Machine d'usinage selon la revendication 9, comprenant en outre : un dispositif de déplacement (17) servant à déplacer l'au moins un rétroréflecteur (19) dans le champ d'usinage (13) du dispositif de balayage (11) .

11. Machine d'usinage selon la revendication 10, avec laquelle le dispositif de déplacement servant à déplacer l'au moins un rétroréflecteur (19) dans le champ d'usinage (13) du dispositif de balayage (11) est réalisé sous la forme d'un dispositif (17) servant à appliquer les couches de poudre (3).

12. Machine d'usinage selon l'une des revendications 9 à 11, avec laquelle le rétroréflecteur (19) est monté sur un élément porteur (14) servant à appliquer les couches de poudre (3).

13. Machine d'usinage selon l'une des revendications 9 à 12, avec laquelle le rétroréflecteur est réalisé sous la forme d'un objet tridimensionnel (19).

14. Machine d'usinage selon la revendication 13, avec lequel le rétroréflecteur est réalisé sous la forme d'une sphère transparente (19).

15. Machine d'usinage selon la revendication 14, avec lequel la sphère transparente (19) est formée de verre de quartz ou de saphir.

16. Machine d'usinage selon l'une des revendications 13 à 15, avec laquelle la sphère transparente (19) présente un diamètre (D) inférieur à 5 mm.

17. Machine d'usinage selon l'une des revendications 9 à 16, avec laquelle le détecteur est réalisé sous la forme d'une diode (22).
